Europäisches Patentamt

European Patent Office

Office européen des brevets

(11) Veröffentlichungsnummer: **0 205 056**
**B1**

(12) **EUROPÄISCHE PATENTSCHRIFT**

(45) Veröffentlichungstag der Patentschrift:
**16.08.89**

(21) Anmeldenummer: **86107387.2**

(22) Anmeldetag: **30.05.86**

(51) Int. Cl.⁴: **G 01 F 25/00, G 05 D 7/03**

(54) **Vorrichtung zur Regelung der Durchflussmenge.**

(30) Priorität: **03.06.85  CH 2329/85**

(43) Veröffentlichungstag der Anmeldung:
**17.12.86 Patentblatt 86/51**

(45) Bekanntmachung des Hinweises auf die Patenterteilung:
**16.08.89 Patentblatt 89/33**

(84) Benannte Vertragsstaaten:
**AT CH FR LI NL SE**

(56) Entgegenhaltungen:
**US-A- 3 035 888**
**US-A- 3 271 994**
**US-A- 3 347 418**

(73) Patentinhaber: **LGZ LANDIS & GYR ZUG AG,
CH-6301 Zug (CH)**

(72) Erfinder: **Ries, Peter, Gildenwaldstrasse 10,
D-6478 Nidda 13 (DE)**

(74) Vertreter: **Müller, Hans-Jürgen, Dipl.-Ing. et al, Müller,
Schupfner & Gauger
Lucile-Grahn-Strasse 38 Postfach 80 13 69,
D-8000 München 80 (DE)**

**Beschreibung**

Die Erfindung bezieht sich auf eine Vorrichtung zur Regelung der Durchflussmenge nach dem Oberbegriff des Patentanspruchs 1.

Solche Vorrichtungen werden benötigt zur Prüfung, bei eichpflichtigen Geräten auch zur Eichung, von Geräten zur Messung der Strömungsgeschwindigkeit von Flüssigkeiten und von Flüssigkeitsmengen als Integral der Strömungsgeschwindigkeit über der Zeit. Bekannt sind Vorrichtungen der Art, dass in einem Kreislauf eine oder mehrere Pumpen, eventuell einzeln zuschaltbar, mit einem Einstellventil, einem Eichinstrument und der Messstrecke mit den Prüflingen in Reihe geschaltet sind (Umwälzprüfstand). Ferner sind, z.B. aus der CH-PS 643 063, Vorrichtungen bekannt, bei denen ein in einem Zylinder sich bewegender Kolben nach der Art einer Dosierpumpe die in einen Kreislauf injizierte Flüssigkeit bestimmt (Verdrängungsprüfstand). Eine auf dem gleichen Prinzip basierende Vorrichtung, jedoch unter Anwendung zweier Förderzylinder, ist in der DE-PS 3 020 979 beschrieben. Bei hohen Anforderungen an die Genauigkeit sind die bei solchen Vorrichtungen auftretenden Druck-Oszillationen störend.

Der Erfindung liegt die Aufgabe zugrunde, eine Vorrichtung zu schaffen, die die Erzeugung eines regelbaren, pulsationsfreien Flüssigkeitsstroms erlaubt, mit dem eine hohe Genauigkeit bei der Prüfung und Eichung von Geräten zur Messung von Strömungsgeschwindigkeiten und Flüssigkeitsmengen möglich ist.

Die genannte Aufgabe wird erfindungsgemäss durch die im Kennzeichen des Patentanspruchs 1 angegebenen Merkmale gelöst.

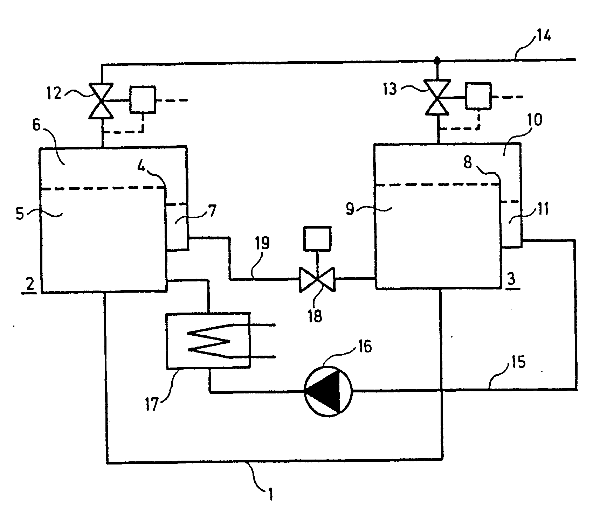

Ein Ausführungsbeispiel der Erfindung ist in der Zeichnung dargestellt und wird im folgenden näher beschrieben.

An eine Messstrecke 1, in der die Menge der pro Zeiteinheit durchfliessenden Flüssigkeit geregelt und konstant gehalten werden soll, ist eingangsseitig ein Vorlauf-Behälter 2 und ausgangsseitig ein Rücklauf-Behälter 3 angeschlossen. Der Innenraum des Vorlauf-Behälters 2 ist gegliedert in einen durch eine erste Überlaufkante 4 begrenzten ersten Niveauraum 5, einen ersten Gasraum 6 und einen ersten Überlaufraum 7. Der Innenraum des dem Vorlauf-Behälter 2 analog aufgebauten Rücklauf-Behälters 3 besteht entsprechend aus einem durch eine zweite Überlaufkante 8 begrenzten zweiten Niveauraum 9, einem zweiten Gasraum 10 und einem zweiten Überlaufraum 11. Am Gasraum 6 des Vorlauf-Behälters 2 ist eine erste Druckregeleinrichtung 12 und am Gasraum 10 des Rücklauf-Behälters 3 eine zweite Druckregeleinrichtung 13 angeschlossen, welche beide mit einer Druckluftleitung 14 verbunden sind. An den Überlaufraum 11 des Rücklauf-Behälters 3 ist eine Förderleitung 15 angeschlossen, die eine Förderpumpe 16 und eine Temperiereinrichtung 17 enthält und zum Niveauraum 5 des Vorlauf-Behälters 2 führt. Vom Überlaufraum 7 des Vorlauf-Behälters 2 führt eine ein Drosselventil 18 enthaltende Überströmleitung 19 zum Niveauraum 9 des Rücklauf-Behälters 3. Die Messstrecke 1, in die die zu prüfenden oder zu eichenden Geräte eingebaut werden können, ist eingangsseitig an den Niveauraum 5 des Vorlauf-Behälters 2 und ausgangsseitig an den Niveauraum 9 des Rücklauf-Behälters 3 angeschlossen.

Mit Hilfe der Regeleinrichtungen 12 und 13 lassen sich die Gasräume 6 und 10 unter pneumatischen Druck setzen. Es ist vorteilhaft, wenn der Vorlauf-Behälter 2 und der Rücklauf-Behälter 3 gleiche Bauart und Baugrösse haben und auf gleicher Höhe montiert sind, weil dann die durch die Höhe der Überlaufkante 4 bzw. 8 bestimmte Flüssigkeitshöhe in beiden Behältern gleich ist, so dass die hydraulische Druckdifferenz zwischen Anfang und Ende der Messstrecke 1 gleich der Differenz der an den Regeleinrichtungen 12 und 13 eingestellten pneumatischen Drücke ist. Die statische hydraulische Druckdifferenz bewirkt einen statischen, pulsationsfreien Flüssigkeitsstrom. Beim Betrieb der Messstrecke 1 soll der an der Regeleinrichtung 12 eingestellte Druck immer grösser als der an der Regeleinrichtung 13 eingestellte Druck sein. Durch diese Massnahme ist die Durchflussrichtung durch die Messstrecke 1 festgelegt.

Die zwischen dem Gasraum 6 des Vorlauf-Behälters 2 und dem Gasraum 10 des Rücklauf-Behälters 3 bestehende pneumatische Druckdifferenz bewirkt, dass Flüssigkeit aus dem Niveauraum 5 des Vorlauf-Behälters 2 durch die Messstrecke 1 in den Niveauraum 9 des Rücklauf-Behälters 3 strömt. Damit die den hydraulischen Druck am Eingang der Messstrecke 1 mitbestimmende Flüssigkeitshöhe im Niveauraum 5 konstant bleibt, muss dem Vorlauf-Behälter 2 gleichzeitig mindestens so viel Flüssigkeit zugeführt werden, wie durch die Messstrecke 1 abfliesst. Dazu dienen die Förderleitung 15 und die Förderpumpe 16. Die Förderpumpe 16 fördert Flüssigkeit aus dem Überlaufraum 11 des Rücklauf-Behälters 3 in den Niveauraum des Vorlauf-Behälters 2. Es ist vorteilhaft, wenn die von der Förderpumpe 16 pro Zeiteinheit geförderte Flüssigkeitsmenge stets grösser ist als die Flüssigkeitsmenge, die pro Zeiteinheit durch die Messstrecke 1 fliesst, weil damit sichergestellt ist, dass der Niveauraum 5 immer bis zur Überlaufkante 4 mit Flüssigkeit gefüllt ist, ohne dass eine exakte Regelung der durch die Förderpumpe 16 geförderten Flüssigkeitsmenge erforderlich wäre. Da die durch die Messstrecke 1 strömende Flüssigkeitsmenge von der Differenz der an den Regeleinrichtungen 12 und 13 eingestellten pneumatischen Drücke abhängig ist, ist es zweckmässig, die Förderleistung der Förderpumpe 16 ebenfalls von der Druckdifferenz abhängig zu machen. Die dazu erforderlichen Mittel sind bekannt und in der Zeichnung nicht dargestellt.

Das Mehr an Flüssigkeit, das die Förderpumpe 16 in den Niveauraum 5 fördert, das aber durch die Messstrecke 1 nicht abfliesst, strömt über die Überlaufkante 4 in den Überlaufraum 7. Die sich im Überlaufraum 7 ansammelnde Flüssigkeit gelangt unter der Wirkung der Druckdifferenz zwischen dem Vorlauf-Behälter 2 und dem Rücklauf-Behälter 3 durch die Überströmleitung 19 mit dem Drosselventil 18 in den Niveauraum 9 des Rücklauf-Behälters 3. Damit durch die Überströmleitung 19 genau so viel Flüssigkeit gefördert wird, wie der Differenz der dem Niveauraum 5 durch die Förderleitung 15 zufliessenden und durch die Messstrecke 1 abfliessenden Flüssigkeitsmenge entspricht, entsprechend der über die Überlaufkante 4 fliessenden Flüssigkeitsmenge, muss das Drosselventil 18 regelbar sein. Dies kann vorteilhaft dadurch erfolgen, dass im Überlaufraum 7 ein Niveauschalter installiert ist, der auf das Drosselventil 18 einwirkt.

Dem Niveauraum 9 des Rücklauf-Behälters 3 wird Flüssigkeit von der Messstrecke 1 und von der Überströmleitung 19 zugeführt. Aus dem Niveauraum 9 abgeführt wird die Flüssigkeit über die Überlaufkante 8 in den Überlaufraum 11. Damit ist auch der Niveauraum 9 immer bis zur Überlaufkante 8 mit Flüssigkeit gefüllt, so dass der mittels der Regeleinrichtung 13 veränderbare Gegendruck auf die Messstrecke 1 konstant bleibt.

Im Hinblick auf die Anwendung der beschriebenen Vorrichtung wird es zweckmässig sein, auch eine Temperiereinrichtung 17 vorzusehen. Diese wird mit Vorteil in die Förderleitung 15 eingebaut, wie das in der Zeichnung dargestellt ist. Je nach Anwendung der Vorrichtung kann die Temperiereinrichtung 17 ein Erhitzer, ein Kühlaggregat oder ein Apparat sein, der sowohl heizen als auch kühlen kann. Bei der Verwendung der Vorrichtung als Prüfstand für Wärmemengenzähler wird zweckmässigerweise ein Erhitzer eingebaut.

Es empfiehlt sich, die Stelle, an der die Förderleitung 15 in den Niveauraum 5 eintritt, so anzuordnen, dass durch die eintretende Flüssigkeit eine möglichst intensive Vermischung mit der sich im Niveauraum 5 befindlichen Flüssigkeit bewirkt wird. Diese Massnahme kann auch für die anderen Ein- und Austrittsstellen von Leitungen am Vorlauf- und am Rücklauf-Behälter 2 bzw. 3 zweckmässig sein.

Als umlaufende Flüssigkeit wird man je nach Anwendungsgebiet der Vorrichtung verschiedene Medien vorsehen. Beim Einsatz als Prüfstand für Wärmemengenzähler wird zweckmässigerweise Wasser verwendet. Wegen der Möglichkeit, mittels der Regeleinrichtungen 12 und 13 sowohl im Vorlauf- als auch im Rücklauf-Behälter 2 bzw. 3 höhere Drücke einzustellen, ist die Verwendung von Wasser auch bei Temperaturen oberhalb des Siedepunktes bei Normaldruck möglich. Dies ermöglicht beispielsweise die Eichung von Wärmemengenzählern für Betriebstemperaturen oberhalb 100°C.

Das beschriebene Prinzip der Vorrichtung hat insbesondere dann, wenn eine Temperiereinrichtung 17 vorhanden ist, den Vorteil, dass thermisch bedingte Volumenausdehnungen der Flüssigkeit ohne Einfluss auf den in der Vorrichtung wirkenden Differenzdruck bleiben. Auch die bei Temperaturerhöhung stattfindende Entgasung des Mediums bleibt ohne Auswirkung auf den Differenzdruck. Vorlauf-Behälter 2 und Rücklauf-Behälter 3 wirken somit als Expansionsgefässe, in denen der Gasdruck mittels der Regeleinrichtungen 12 und 13 automatisch konstant gehalten wird. Druckschwankungen durch thermisch bedingte Volumenänderungen, wie sie wegen der Inkompressibilität flüssiger Medien bei Umlauf- und Verdrängungs-Prüfständen auftreten, sind dadurch ausgeschlossen.

Gegenüber den vielfach für solche Zwecke eingesetzten Umwälzprüfständen, bei denen eine oder mehrere, eventuell einzeln zuschaltbare Umwälzpumpen den Differenzdruck über der Messstrecke bestimmen, hat die beschriebene Vorrichtung den Vorteil, dass sie frei ist von den bei Umwälzpumpen zwangsläufig auftretenden Druck-Oszillationen. Ähnliches gilt im Vergleich mit den ebenfalls üblichen Verdränger-Prüfständen, bei denen infolge der pro Hubzyklus zweimal auftretenden Richtungsumkehr des Förderkolbens starke Druck-Oszillationen unvermeidlich sind. Dadurch lassen sich gegenüber Umwälz- und Verdrängungs-Prüfständen erheblich grössere Genauigkeiten bei der Prüfung und Eichung von Wärmemengenzählern und anderen die Durchflussmenge messenden Geräten erzielen.

## Patentansprüche

1. Vorrichtung zur Steuerung oder Regelung der Durchflussmenge einer Flüssigkeit durch eine Messstrecke (1), dadurch gekennzeichnet, dass sie besteht aus:
— einem Vorlauf-Behälter (2), umfassend einen von einer ersten Überlaufkante (4) begrenzten ersten Niveauraum (5), einen ersten Gasraum (6) und einen ersten Überlaufraum (7),
— einem Rücklauf-Behälter (3), umfassend einen durch eine zweite Überlaufkante (8) begrenzten zweiten Niveauraum (9), einen zweiten Gasraum (10) und einen zweiten Überlaufraum (11),
— einer in eine Förderleitung (15) eingebauten, die Flüssigkeit aus dem Rücklauf-Behälter (3) in den Vorlauf-Behälter (2) fördernden Förderpumpe (16),
— einer vom ersten Überlaufraum (7) des Vorlauf-Behälters (2) zum Rücklauf-Behälter (3) führenden Überströmleitung (19), die ein Drosselventil (18) enthält,
— einer ersten, den Druck im Vorlauf-Behälter (2) regelnden Regeleinrichtung (12), und
— einer zweiten, den Druck im Rücklauf-Behälter (3) regelnden Regeleinrichtung (13),
und dass die Messstrecke (1) zwischen dem ersten Niveauraum (5) und dem zweiten Niveauraum (9) angeschlossen ist.

2. Vorrichtung nach Anspruch 1, dadurch gekennzeichnet, dass Bauart und Baugrösse von Vorlauf-Behälter (2) und Rücklauf-Behälter (3) gleich sind und dass sie auf gleicher Höhe montiert sind, so dass der Differenzdruck über der Messstrecke (1) gleich der Differenz der an den Regeleinrichtungen (12, 13) eingestellten Drücke ist.

3. Vorrichtung nach Anspruch 1 oder 2, dadurch gekennzeichnet, dass sie eine Temperiereinrichtung (17) für die Flüssigkeit besitzt.

4. Vorrichtung nach Anspruch 3, dadurch gekennzeichnet, dass die Temperiereinrichtung (17) in die Förderleitung (15) eingebaut ist.

5. Vorrichtung nach Anspruch 1 oder 2, dadurch gekennzeichnet, dass sie Mittel aufweist, die die Förderleistung der Förderpumpe (16) von der Differenz der an den Regeleinrichtungen (12, 13) eingestellten Drücke abhängig machen.

6. Vorrichtung nach einem der vorherigen Ansprüche, dadurch gekennzeichnet, dass ein im ersten Überlaufraum (7) installierter Niveauschalter das Drosselventil (18) steuert.

7. Vorrichtung nach einem der vorherigen Ansprüche, dadurch gekennzeichnet, dass die beiden Regeleinrichtungen (12, 13) an den Gasräumen von Vorlauf- bzw. Rücklauf-Behälter (2 bzw. 3) einerseits und einer Druckluftleitung andererseits angeschlossen sind.

## Claims

1. Apparatus for controlling or regulating the quantitative flow rate of a liquid through a measuring section (1) characterised in that it comprises:
— a feed container (2) including a first level chamber (5) defined by a first overflow edge (4), a first gas chamber (6) and a first overflow chamber (7),
— a return container (3) including a second level chamber (9) defined by a second overflow edge (8), a second gas chamber (10) and a second overflow chamber (11),
— a delivery pump (16) which is installed in a conveyor conduit (15), for conveying the liquid from the return container (3) into the feed container (2),
— a transfer conduit (19) which leads from the first overflow chamber (7) of the feed container (2) to the return container (3) and which includes a throttle valve (18),
— a first regulating means (12) for regulating the pressure in the feed container (2), and
— a second regulating means (13) for regulating the pressure in the return container (3), and that the measuring section (1) is connected between the first level chamber (5) and the second level chamber (9).

2. Apparatus according to claim 1 characterised in that the feed container (2) and the return container (3) are of the same design configuration and size and that they are mounted at the same level so that the pressure difference over the measuring section (1) is equal to the difference in the pressure which are set at the regulating means (12, 13).

3. Apparatus according to claim 1 or claim 2 characterised in that it has a means (17) for controlling the temperature of the liquid.

4. Apparatus according to claim 3 characterised in that the temperature-control means (17) is incorporated into the conveyor conduit (15).

5. Apparatus according to claim 1 or claim 2 characterised in that it has means for making the delivery of the delivery pump (16) dependent on the difference in the pressures which are set at the regulating means (12, 13).

6. Apparatus according to one of the preceding claims characterised in that a level switch installed in the first overflow chamber (7) controls the throttle valve (18).

7. Apparatus according to one of the preceding claims characterised in that the two regulating means (12, 13) are connected to the gas chambers of the feed and return containers (2 and 3) respectively on the one hand and to a compressed air conduit on the other hand.

## Revendications

1. Dispositif pour commander ou régler le débit d'un liquide dans une section de mesure (1), caractérisé en ce qu'il est constitué par:
— un récipient (2) situé dans le circuit aller et comprenant une première chambre (5) délimitant un niveau et limitée par un premier bord de trop-plein (4), un premier espace (6) pour le gaz et une première chambre de trop-plein (7),
— un récipient (3) situé dans le circuit de retour et comprenant une seconde chambre (9) délimitant un niveau et limitée par un second bord de trop-plein (8), un second espace (10) pour le gaz et une seconde chambre de trop-plein (11),
— une pompe de circulation (16) montée dans une canalisation de refoulement (15) et entraînant le liquide depuis le récipient (3) situé dans le circuit de retour en direction du récipient (2) situé dans le circuit aller,
— une canalisation de trop-plein (19), qui relie la première chambre de trop-plein (7) du récipient (2) situé dans le circuit aller au récipient (3) situé dans le circuit de retard et contient un papillon d'étranglement (18),
— un premier dispositif de régulation (12), qui règle la pression dans le récipient (2) situé dans le circuit aller, et
— un second dispositif de régulation (13) qui règle la pression dans le récipient (3) situé dans le circuit de retour, et que la section de mesure (1) est installée entre la première chambre (5), délimitant un niveau, et la seconde chambre (9), délimitant un niveau.

2. Dispositif selon la revendication 1, caractérisé en ce que la constitution et les dimensions du récipient (2) situé dans le circuit aller et du récipient (3) situé dans le circuit de retour sont les mêmes et que ces récipients sont installés à une même hauteur de sorte que la pression différentielle dans la section de mesure (1) est égale à la différence des pressions réglées dans les dispositifs de régulation (12, 13).

3. Dispositif selon la revendication 1 ou 2, caractérisé en ce qu'il comporte un dispositif (17) de mise en température du liquide.

4. Dispositif selon la revendication 3, caractérisé en ce que le dispositif (17) de mise en température est monté dans la canalisation de refoulement (15).

5. Dispositif selon la revendication 1 ou 2, caractérisé en ce qu'il comporte des moyens, qui rendent la puissance du refoulement de la pompe de circulation (16), dépendante de la différence entre les pressions réglées dans les dispositifs de régulation (12, 13).

6. Dispositif selon l'une des revendications précédentes, caractérisé en ce qu'un interrupteur de niveau, installé dans la première chambre de trop-plein (7), commande le papillon d'étranglement (18).

7. Dispositif selon l'une des revendications précédentes, caractérisé en ce que les deux dispositifs de régulation (12, 13) sont raccordés d'une part aux espaces contenant le gaz du récipient (2) situé dans le circuit aller et du récipient (3) situé dans le circuit de retour et, d'autre part, à une canalisation d'air comprimé.